# EUROPÄISCHE PATENTSCHRIFT

(11) **EP 2 301 865 B1**
(45) Veröffentlichungstag und Bekanntmachung des Hinweises auf die Patenterteilung: **13.08.2014**
(21) Anmeldenummer: 10010023.9
(22) Anmeldetag: 21.09.2010
(51) Int. Cl.: B65G 1/137, B65G 57/03, B65G 57/10

(54) **Anlage zum Zuführen und Lagern von Reifen auf Paletten**
Assembly for supplying and storing tyres on palettes
Installation de transport et de stockage de pneus sur des palettes

(30) Priorität: 25.09.2009 DE 102009043084
(43) Veröffentlichungstag der Anmeldung: 30.03.2011
(73) Patentinhaber: Gawronski GmbH Industrievertretungen, 73765 Neuhausen (DE)
(72) Erfinder: Gawronski, Seweryn, 73765 Neuhausen (DE)
(74) Vertreter: Goy, Wolfgang

(56) Entgegenhaltungen:
- EP-A1- 2 088 097
- WO-A1-00/26128
- US-B1- 6 315 513

## Beschreibung

Die Erfindung betrifft eine Anlage zum Zuführen und Lagern von Reifen auf Paletten nach dem Oberbegriff des Anspruchs 1 (vgl. EP 2 088 097 A1).

Ein besonderes Problem stellt die Logistik der Reifen nach deren Herstellung dar. Denn die Reifen müssen von dem Herstellungsbereich dem Logistikbereich übergeben werden. Dabei werden Reifen mit gleichen Atikelnummern auf Paletten gelagert. Die Besonderheit des Problems besteht darin, daß eine sehr große Menge an Reifen zeitlich abgearbeitet werden müssen.

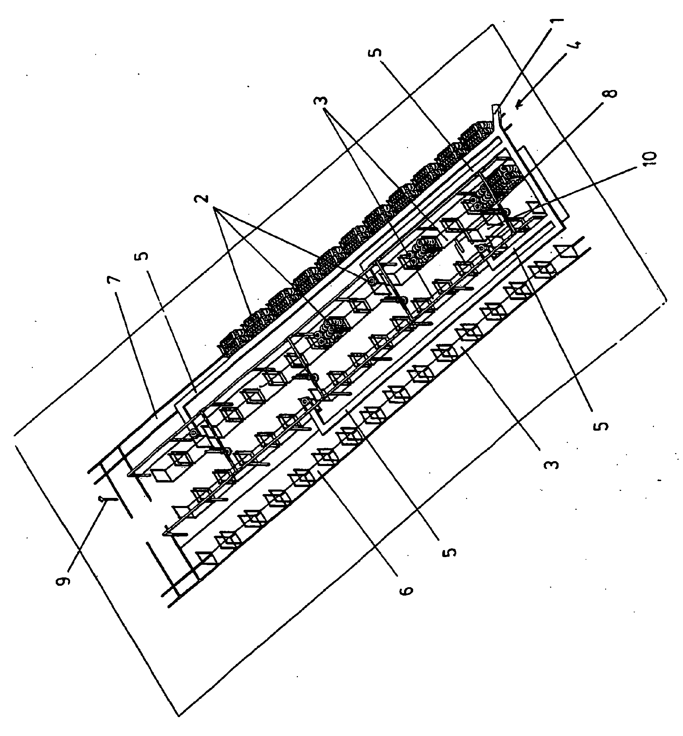

Die EP 2 088 097 A1 zeigt eine Anlage zum Zuführen und Lagern beispielsweise von Reifen auf Paletten der eingangs angegebenen Art. Das Grundprinzip der Ausführungsform in Fig. 29 besteht darin, daß beidseits einer Zuführeinrichtung für die Reifen zwei Reihen von Paletten angeordnet sind. Die auf der Zuführeinrichtung zugeführten Reifen werden dabei mittels einer Greifeinrichtung aufgenommen und auf der gewünschten Palette abgesetzt. Sobald eine bestimmte Palette voll ist, wird eine Transporteinrichtung in die entsprechende Position zwischen den beiden Palettenreihen verfahren. Die Transporteinrichtung nimmt die volle Palette auf. Anschließend wird die Transporteinrichtung zwischen den beiden Palettenreihen in Längsrichtung verfahren und am Ende in einer Aufnahmeposition abgesetzt. Von dort aus erfolgt der Weitertransport der befüllten Palette. Der anderen Palettenreihe ist eine Zuführeinrichtung für leere Paletten zugeordnet. Diese können ebenfalls mittels der Transporteinrichtung aufgenommen und zwischen den beiden Palettenreihen derart verschoben werden, daß die leere Palette dann in der entsprechenden Position in die Lücke der jeweiligen Palettenreihe eingefügt werden kann.

Davon ausgehend liegt der Erfindung die **Aufgabe** zugrunde, die Anlage zum Zuführen und Lagern von Reifen auf Paletten der eingangs angegebenen Art dahingehend weiterzuentwickeln, daß das Zuführen von leeren Paletten und das Abführen von gefüllten Paletten vereinfacht ist.

Die technische **Lösung** ist gekennzeichnet durch die Merkmale des Anspruchs 1.

Die Grundidee der erfindungsgemäßen Anlage liegt in einem Paletten-Positionier-System, welches auch sehr große Mengen an Reifen von einem Zentralcomputer aus gesteuert zeitlich schnell und sicher palettiert werden kann. Die technische Realisierung sieht zunächst vor, daß im Bereich der Zuführeinrichtung für die Reifen eine Einrichtung vorgesehen ist, welche die Reifen individuell erkennt und die Daten im Zentralcomputer abspeichert. Der Zentralcomputer weiß, welcher individuellen Palette dieser Reifen zugeführt und dort abgelegt werden muß. Dies bedeutet, daß die Reifenerkennungseinrichtung im Bereich der Zuführeinrichtung die Reifen individuell erkennt und die Daten in dem Zentralrechner abspeichert. Dieser Zentralrechner führt den jeweiligen Reifen dann einer bestimmten Palette zu und legt ihn dort ab. Hierzu dienen die Reifentransportbänder. Dabei wird dasjenige Reifentransportband ausgewählt, welches den kürzesten Weg zu der stationär angeordneten und mit diesem Reifen zu befüllenden Palette hat. Am Ende dieses Reifentransportbandes befindet sich eine Entnahmeeinrichtung, welche den Reifen von dem Reifentransportband entnimmt, ihn anschließend zu der jeweiligen Palette transportiert und ihn dann dort ablegt. Sobald die Palette voll ist oder keine weiteren Reifen dieser Palette zugeführt werden sollen, wird die so gefüllte Palette der Palettenreihe entnommen und dem Palettenabtransportförderband zugeführt, mit welchem die Palette mit ihrem Reifen schließlich die Anlage verläßt. Der frei gewordene Platz der gerade entnommenen, vollen Palette wird durch eine leer Palette ersetzt. Insgesamt ist dadurch ein sehr sicher arbeitendes und vom zeitlichen Ablauf her sehr schnelles System zum Zuführen und Lagern von Reifen auf bestimmte Paletten geschaffen.

Die Erfindung schlägt vor, daß die Reihe bzw. die Reihen von zu befüllenden Paletten beidseitig von Palettentransportbändern eingerahmt ist. Auf der einen Seite befinden sich dabei die leeren Paletten und auf der anderen Seite die gefüllten Paletten. Andere Anordnungen dieser Palettentransportbänder für die leeren sowie für die befüllten Paletten sind selbstverständlich denkbar. Beispielsweise können die Palettentransportbänder auch direkt nebeneinander angeordnet sein.

Die Weiterbildung gemäß Anspruch 2 schlägt vor, daß der Reihe von zu befüllenden Paletten mehrere Reifentransportbänder zugeordnet ist. Dies bedeutet, daß die Reifentransportbänder über die Länge der Palettenreihe gesehen an unterschiedlichen Stellen münden. Der Vorteil besteht darin, daß durch eine entsprechende Ansteuerung des Reifentransportbandes der nächste Weg zu der zu befüllenden Palette bestimmt werden kann.

Vorzugsweise erstrecken sich gemäß der Weiterbildung in Anspruch 3 die Reifentransportbänder parallel zu der Reihe der zu befüllenden Paletten. Dadurch ist ein sehr kompaktes System geschaffen, bei der die Transportrichtungen sowie Anordnungen der Paletten allesamt parallel zueinander ausgerichtet sind.

Vorzugsweise sind gemäß der Weiterbildung in Anspruch 4 in Abhängigkeit von der geforderten Kapazität der Anlage mehrere Reihen von zu befüllenden Paletten vorgesehen, wobei jeder Reihe wenigstens ein Reifentransportband zugeordnet ist. Vorzugsweise sind jeder Reihe wenigstens zwei Reifentransportbänder zugeordnet. Indem mehrere Reihen von zu befüllenden Paletten vorgesehen sind, wird dadurch die Kapazität weiter erhöht.

Gemäß der Weiterbildung in Anspruch 5 ist die Entnahme-, Transport- und Abgabeeinrichtung als Portaleinrichtung ausgebildet. Dies bedeutet, daß diese Portaleinrichtung längs der zu befüllenden Paletten verfahrbar ist, wobei die Portaleinrichtung diese Paletten portalartig überspannt. Dies bedeutet, daß sich die zu transportierenden und auf die jeweilige Paletten abzulagernden Reifen im oberen Bereich dieser Transporteinrichtung befinden.

Weiterhin schlägt die Weiterbildung gemäß Anspruch 6 vor, daß eine Transpondereinrichtung vorgesehen ist. Diese Transpondereinrichtung hat die Aufgabe, die befüllten Paletten mit ihren Inhalten kennzeichnen und identifizieren zu können, bevor sie der weiteren Logistik zugeführt werden. Dies kann auf unterschiedliche Art und Weise geschehen. Grundsätzlich ist immer ein Transponder an der Palette angebracht. Dieser Transponder kann mit spezifischen Daten mittels der Transpondereinrichtung beschrieben werden. So ist es zunächst möglich, diesen Transponder an der Palette mit den Daten über den Inhalt der Palette zu beschreiben. Denn im Zentralcomputer sind sämtliche Daten über den Paletteninhalt abgespeichert. Diese Daten werden dann beim Vorbeiführen der Palette an der Transpondereinrichtung auf dem Transponder geschrieben und abgespeichert. Aufgrund dieser Transponderinformationen hat dann in der weiteren Logistik der Gabelstapelfahrer, welcher die Palette zu einem bestimmten Stellplatz transportieren muß, die konkrete Information, um was für eine Palette es sich mit welchem Inhalt handelt und welcher Stellplatz für diese Palette vorgesehen ist. Weiterhin ist es alternativ möglich, daß der Transponder der Palette mit einer bestimmten Palettenidentifikationsnummer versehen wird, welche ebenfalls vom Zentralcomputer vergeben wird. Der Gabelstapelfahrer ruft dann mittels einer elektronischen Leseeinrichtung diese Palettenidentifikationsnummer ab und weiß, welcher Stellplatz dieser Palette zugeordnet ist. Grundsätzlich werden somit auf den Transponder der Palette Identifikationsdaten gespeichert, welche es dem Gabelstapelfahrer ermöglichen, die richtige Logistik einzuleiten. Insgesamt besteht die Grundidee somit in einer Transpondereinrichtung mit an den Paletten angeordneten Transpondern, welche vom Zentralcomputer mit den Daten über den Inhalt der jeweiligen Palette beschrieben werden, bevor diese auf das Palettenabtransportförderband gelangen oder im Bereich dieses Palettenabtransportförderbandes. Dies dient der Identifikation der Paletten, wenn diese der weiteren Logistik außerhalb der Anlage zugeführt werden.

Ein Ausführungsbeispiel einer erfindungsgemäßen Anlage zum Zuführen und Lagern von Reifen auf Paletten wird nachfolgend anhand der Zeichnung beschrieben. Diese zeigt eine perspektivische Gesamtansicht der Anlage.

Die Anlage weist zunächst eine Zuführeinrichtung 1 für Reifen 2 auf, welche auf Paletten 3 gelagert werden sollen. Dieser Zuführeinrichtung 1 zugeordnet ist eine Reifenerkennungseinrichtung 4. Mit dieser kann der Reifentyp mittels eines geeigneten/entsprechenden Erkennungssystems identifiziert werden, beispielsweise mittels eines Barcode-Lesers.

Von der Zuführeinrichtung 1 mit ihrer Reifenerkennungseinrichtung 4 gehen insgesamt vier Reifentransportbänder 5 sternförmig aus. Diese sind allesamt parallel zueinander ausgerichtet.

Zwischen den vier Reifentransportbändern 5 befinden sich zwei Reihen von zu befüllenden Paletten 3. Diese sind dort stationär angeordnet.

In der Zeichnung links befindet sich parallel zu den Reifentransportbändern 5 bzw. zu den beiden Reihen der zu befüllenden Paletten 3 eine Reihe von leeren Paletten 3 auf einem Palettenzuführtransportband 6. Auf der gegenüberliegenden Seite befindet sich ein Palettenabtransportförderband 7.

Die Funktionsweise der Anlage ist wie folgt:

Die Reifen werden über die Zuführeinrichtung 1 der Anlage zugeführt und mittels der Reifenerkennungseinrichtung 4 im Bereich dieser Zuführeinrichtung 1 individuell erkannt.

Der Zentralcomputer weiß aufgrund dieser Identifizierung, auf welcher speziellen Palette 3 dieser Reifen 2 gelagert werden muß. Aufgrund dieser Vorgaben wird dasjenige Reifentransportband 5 der insgesamt vier Reifentransportbändern 5 ausgewählt, welches mit seinem Ende der gewünschten Palette 3 am nächsten ist.

Sobald der Reifen 2 das Ende des ausgewählten Reifentransportbandes 5 erreicht hat, wird der Reifen 2 mittels einer Einrichtung 8 vom Reifentransportband 5 entnommen, zu der gewünschten Palette 3 transportiert und dort auf der Palette 3 abgegeben. Als Entnahme-, Transport- und Abgabe-Einrichtung 8 dient vorzugsweise eine Portaleinrichtung.

Auf diese Weise sind die in den beiden mittleren Reihen befindlichen und zu füllenden Paletten 3 gezielt mit bestimmten Reifen 2 befüllbar. Sobald die Palette 3 voll ist oder keine weiteren Reifen 2 mehr kommen, ist die Bestückung dieser bestimmten Palette 3 fertig. Sie kann nun mittels einer entsprechenden Transporteinheit (Portalroboter) an einer Transpondereinrichtung 9 vorbei dem Palettenabtransportband 7 zugeführt werden.

Mittels der Transpondereinrichtung 9 werden in einem an der Palette 3 angeordneten Transponder Daten abgespeichert, bevor die befüllten Palette 3 der weiteren Logistik zugeführt wird. Die Steuerung der Transpondereinrichtung 9 mit der Übertragung der Daten auf den Transponder erfolgt vom Zentralcomputer aus. Denn dieser hat die Daten abgespeichert, welche Palette 3 mit welchen Reifen 2 bestückt worden ist. Die für die weitere Logistik notwendigen Daten können dann aus dem Transponder ausgelesen werden.

Bei der Abholung der Palette 3 mittels eines Gabelstablers kann dieser die im Transponder abgespeicherten Daten (beispielsweise die Sorte der abgelegten Reifen 2 und/oder die Identifizierung der Palette 3) auslesen und so die Palette 3 dem vorgesehenen Lagerplatz zuführen.

Der leergewordene Platz der abgeführten Palette 3 wird durch eine neue, leere Palette aus dem Palettenzuführtransportband 6 ersetzt. Hierzu dient eine Palettenzuführeinrichtung 10.

### Bezugszeichenliste

- 1: Zuführeinrichtung
- 2: Reifen
- 3: Palette
- 4: Reifenerkennungseinrichtung
- 5: Reifentransportband
- 6: Palettenzuführtransportband
- 7: Palettenabtransportband
- 8: Entnahme-, Transport- und Abgabeeinrichtung
- 9: Transpondereinrichtung
- 10: Palettenzuführeinrichtung

## Patentansprüche

1. Anlage zum Zuführen und Lagern von Reifen (2) auf Paletten (3),
mit einer Zuführeinrichtung (1) der Reifen (2) zu der Anlage,
mit einer Reifenerkennungseinrichtung (4),
mit wenigstens einem von der Zuführeinrichtung (1) für die Reifen (2) ausgehenden Reifentransportband (5),
mit jeweils wenigstens einer dem Ende des Reifentransportbandes (5) zugeordneten Entnahme-, Transport- und Abgabeeinrichtung (8) für die Reifen,
mit einer Reihe von mehreren zu befüllenden Paletten (3), an welcher das Reifentransportband (5) mündet und welchen die Entnahme-, Transport- und Abgabeeinrichtung (8) die Reifen (2) gezielt zuführt,
mit einem Palettenabtransportband (7), welchem die fertig befüllten Paletten (3) übergeben und mit diesem abtransportiert werden,
mit einer Palettenzuführeinrichtung (11) zum Zuführen von leeren Paletten (3) an die frei gewordene Stelle der gerade befüllten Palette (3) sowie
mit einem Zentralrechner zur Identifizierung der Reifen (2) sowie Paletten (3) sowie zur Steuerung der Abläufe,
**dadurch gekennzeichnet,**
**daß** die Reifenerkennungseinrichtung (4) im Bereich der Zuführeinrichtung (1) vorgesehen ist ,
**daß** auf der einen Seite der Reihe/n der zu befüllenden Paletten (3) parallel ein Palettenzuführtransportband (6) für leere Paletten (3) vorgesehen ist und
**daß** auf der anderen Seite der Reihe der zu befüllenden Palette (3) parallel das Reifenabtransportförderband (7) vorgesehen ist.

2. Anlage nach dem vorhergehenden Anspruch,
**dadurch gekennzeichnet,**
**daß** der Reihe von zu befüllenden Paletten (3) mehrere Reifentransportbänder (5) zugeordnet sind.

3. Anlage nach einem der vorhergehenden Ansprüche,
**dadurch gekennzeichnet,**
**daß** sich das Reifentransportband (5) parallel zu der Reihe der zu befüllenden Paletten (3) erstreckt.

4. Anlage nach einem der vorhergehenden Ansprüche,
**dadurch gekennzeichnet,**
**daß** mehrere Reihen von zu befüllenden Paletten (3) vorgesehen sind und
**daß** jeder Reihe wenigstens ein Reifentransportband (5) zugeordnet ist.

5. Anlage nach einem der vorhergehenden Ansprüche,
**dadurch gekennzeichnet,**
**daß** die Entnahme-, Transport- und Abgabeeinrichtung (8) als Portaleinrichtung ausgebildet ist.

6. Anlage nach einem der vorhergehenden Ansprüche,
**dadurch gekennzeichnet,**
**daß** eine Transpondereinrichtung (9) zum Identifizieren der Paletten vorgesehen ist, insbesondere bevor diese auf das Palettenabtransportförderband (7) gelangen.

## Claims

1. An installation for feeding and storing tires (2) on pallets (3),
comprising a feeding device (1) for the tires (2) to the installation,
comprising a tire identification device (4),
comprising at least one tire conveyor belt (5), which starts at the feeding device (1) for the tires (2),
in each case comprising at least one removal, transport and delivery device (8) for the tires, which is assigned to the end of the tire conveyor belt (5),
comprising a number of a plurality of pallets (3), which are to be filled, at which the tire conveyor belt (5) ends and to which the removal, transport and delivery device (8) feeds the tires (2) in a specific manner,
comprising a pallet removal belt (7), to which the ready-filled pallets (3) are transferred and by means of which they are removed,
comprising a pallet feeding device (11) for feeding empty pallets (3) to the location, which has become vacant, of the pallet (3), which has just been filled, as well as
comprising a central computer for identifying the tires (2) and pallets (3) as well as for controlling the processes,
**characterized in**
**that** the tire identification device (4) is provided in the area of the feeding device (1),
**that** provision is made parallel on the one side of the row(s) of the pallets (3), which are to be filled, for a pallet feeding conveyor belt (6) for empty pallets (3) and
**that** provision is made parallel on the other side of the row of the pallet (3), which is to be filled, for the tire removal conveyor belt (7).

2. Installation according to the preceding claim,
**characterized in that**
a number of tire transport conveyor belts (3) is related to the row of pallets (3) which are to be filled.

3. Installation according to one of the preceding claims,
**characterized in that**
the tire transport conveyor belt (5) are collateral with the row of pallets (3) which are to be filled.

4. Installation according to one of the preceding claims,
**characterized in that**
a plurality of rows of pallets (3) to be filled is provided and that at least one tire transport conveyor belt (5) is related to each row.

5. Installation according to one of the preceding claims,
**characterized in that**
the removal, transport and delivery device (8) is designed as a portal device.

6. Installation according to one of the preceding claims,
**characterized in that**
a transponder device (9) for identification of the pallets is provided, in particular before said palettes arrive onto the tire removal conveyor belt (7).

## Revendications

1. Installation de transport et de stockage de pneus (2) sur des palettes (3),
comprenant un dispositif de transport (1) des pneus (2) vers l'installation,
comprenant un dispositif de détection des pneus (4),
comprenant au moins une bande transporteuse de pneus (5) partant du dispositif de transport (1) des pneus (2),
comprenant respectivement au moins un dispositif d'enlèvement, de transport et de dépôt (8) pour les pneus, disposé à la fin de la bande transporteuse de pneus (5),
comprenant une rangée de plusieurs palettes (3) à remplir, sur lesquelles la bande transporteuse de pneus (5) débouche et vers lesquelles le dispositif d'enlèvement, de transport et de dépôt (8) transporte les pneus (2) de manière ciblée,
comprenant une courroie d'évacuation de palettes (7) à laquelle les palettes (3) remplies et prêtes sont transmises et évacuées avec celle-ci,
comprenant un dispositif de transport de palettes (11) pour amener des palettes (3) vides à l'endroit laissé libre de la palette (3) déjà remplie, ainsi qu'un ordinateur central pour identifier les pneus (2) et les palettes (3) et pour commander le déroulement,
**caractérisé en ce que**
le dispositif de détection des pneus (4) est prévu au niveau du dispositif de transport (1),
qu'une bande transporteuse des palettes (6) pour les palettes vides (3) est prévue en parallèle sur un côté de la/des rangée(s) des palettes (3) à remplir, et que la courroie d'évacuation de palettes (7) est prévue sur l'autre côté de la rangée des palettes (3) à remplir.

2. Installation selon la revendication précédent,
characterisée en ce que
plusieurs bandes transporteuse de pneus (5) sont attribuées à la rangée des palettes (3) à remplir.

3. Installation selon une revendication précédent,
characterisée en ce que
la bande transporteuse de pneus (5) s'étende parallèlement avec la rangée des palettes (3) à remplir.

4. Installation selon une revendication précédent,
characterisée en ce que
plusieurs rangée(s) des palettes (3) à remplir sont prévues et que au moins une bande transporteuse de pneus (5) est attribuées a chacun des rangées des palettes (3) à remplir.

5. Installation selon une revendication précédent,
characterisée en ce que
le dispositif d'enlèvement, de transport et de dépôt (8) est dessiné comme un dispositif portal

6. Installation selon une revendication précédent,
characterisée en ce que
un dispositif transpondeur (9) est prévu pour identification des palettes, en particulier avant celles-là arrivent sur la courroie d'évacuation de palettes (7).
